# EUROPÄISCHE PATENTANMELDUNG

(11) **EP 3 034 565 A1**
(43) Veröffentlichungstag der Anmeldung: **22.06.2016**
(21) Anmeldenummer: 14198357.7
(22) Anmeldetag: 16.12.2014
(51) Int. Cl.: C09C 1/36

(54) **TITANHALTIGE, ELEKTRISCH LEITFÄHIGE NANOSTRUKTUREN**

(71) Anmelder: Technische Hochschule Nuernberg Georg-Simon-Ohm, 90489 Nuernberg (DE)
(72) Erfinder: Herbst, Kai, 90402 Nürnberg (DE); Roudenko, Jewgeni, 91580 Petersaurach (DE); Frey, Thomas, 91207 Lauf a.d. Pegnitz (DE)
(74) Vertreter: Huebner, Stefan Rolf

(57) **Zusammenfassung**

Die Erfindung betrifft ein Verfahren zum Behandeln einer Titanoxidverbindung, wobei die Titanoxidverbindung zumindest Kohlenstoff, Stickstoff und/oder Wasserstoff und einer Temperatur zwischen 600 °C und 1200 °C ausgesetzt wird.

Mit der Erfindung kann eine Erhöhung der elektrischen Leitfähigkeit von Titanoxidverbindungen erreicht werden.

## Beschreibung

### Gebiet der Erfindung

Die Erfindung betrifft ein Verfahren zum Behandeln einer Titanoxidverbindung, ein Verfahren zur Herstellung einer Nanostruktur aus einer Titanoxidverbindung, ein Verfahren zur Erhöhung der elektrischen Leitfähigkeit einer Nanostruktur aus einer Titanoxidverbindung und Nanostrukturen aus einer Titanoxidverbindung.

### Hintergrund der Erfindung

Nanostrukturen, die ein hohes Verhältnis von Oberfläche zu Masse bzw. Volumen aufweisen, eignen sich für grenzflächenbestimmte Anwendungen, zum Beispiel als Träger für Katalysatorpartikel in der chemischen und elektrochemischen Reaktionstechnik (in der heterogenen Katalyse), sowie als Photokatalysator, Adsorbens und dergleichen.

Titanhaltige Nanostrukturen mit Röhrchen- oder Röllchenform, insbesondere Nanostrukturen aus Titanoxid oder Titanat, sind dabei von besonderem Interesse, da diese in einem einfachen Verfahren, dem sogenannten Hydrothermalverfahren, hergestellt werden können. Im Hydrothermalverfahren wird ein Ausgangsstoff, z.B. ein Titandioxidpulver, in alkalischer Lösung wie beispielsweise Natronlauge über eine gewisse Zeit erhitzt. Dabei fallen nach verbreiteter Auffassung Dünnschichten bzw. Filme aus, die sich zu Nanoröhren bzw. Nanoröllchen aufrollen können. Solchermaßen hergestellte Nanoröhrchen oder Nanoröllchen weisen eine große spezifische Oberfläche auf.

Beispielsweise offenbart die europäische Patentschrift EP 0 832 847 B1 eine solche Nanostruktursynthese, wobei Titandioxid als Ausgangsmaterial für die Nanoröhrchensynthese im Sol-Gel-Verfahren mit SiO₂ dotiert wird, um eine erhöhte spezifische Oberfläche zu erreichen.

Die europäische Patentschrift EP 1 988 059 B1 offenbart ein Nanoröhrchensyntheseverfahren, bei dem Nanoröhrchen aus Titandioxid in einem auf dem Hydrothermalverfahren basierenden, kontinuierlichen Prozess hergestellt werden, und mit dem spezifische Oberflächen der Nanoröhrchen von 50 m²/g bis 450 m²/g erreichbar sind.

Die US-amerikanische Patentschrift US 7,645,439 B2 offenbart die Erzeugung von Nanostrukturen aus Titanoxid mit einer Zusammensetzung TiO₂₋ₓ wobei 0≤x≤1. Diese Nanostrukturen werden ausgehend von im Sol-Gel-Verfahren hergestelltem amorphen Titanoxyhydroxid oder Titandioxid in Anatas- oder Rutilmodifikation synthetisiert. Mit den damit hergestellten Nanostrukturen sind spezifische Oberflächen von 100 m²/g bis 400 m²/g erreichbar.

Neben der großen spezifischen Oberfläche ist besonders der Transport von Elektronen von Interesse. Elektrisch leitfähige Nanoröhrchen und Nanoröllchen zeigen ein großes Potential für Anwendungen als Elektrodenstrukturen, selektive Membranen, photokatalytische Materialien und dergleichen. Die an sich geringe elektrische Leitfähigkeit des Titandioxids und des Titanats begrenzen jedoch den Umfang der möglichen Anwendungen von herkömmlichen Nanoröhrchen und Nanoröllchen aus Titanoxidverbindungen.

Es ist daher wünschenswert, die Eigenschaften von Nanoröhrchen und Nanoröllchen aus Titanoxidverbindungen, insbesondere die elektrische Leitfähigkeit, im Hinblick auf die oben genannten Anwendungen zu verbessern, d.h. insbesondere die elektrische Leitfähigkeit zu erhöhen. Eine konventionelle Methode zur Verbesserung der Eigenschaften von Nanoröhrchen und Nanoröllchen aus Titanoxidverbindungen und verwandten Strukturen ist, Kohlenstoff und/oder Stickstoff in die titanhaltigen Nanoröhrchen und Nanoröllchen einzubringen (auch als Dotierung mit Kohlenstoff und/ oder Stickstoff bezeichnet) oder Titan-Suboxidphasen durch thermische oder chemische Reduktion zu erzeugen. Dabei besteht jedoch das Problem, dass die Dotierung bzw. die Erzeugung der Titan-Suboxidphasen konventionell unter vergleichsweise hohen Temperaturen erfolgt, was mit einer Verringerung der spezifischen Oberfläche der Nanoröhrchen oder Nanoröllchen bis hin zu einem Kollabieren der Röhrchen- bzw. Röllchenstruktur einhergehen kann. Außerdem besteht das Problem, dass mit den konventionellen Methoden die elektrische Leitfähigkeit nur unzureichend erhöht werden kann.

Aus M. E. Neville et al., Journal of Photochemistry and Photobiology A: Chemistry, Vol. 267 (2013), Seiten 17-24 ist außerdem bekannt, in einem Sol-Gel-Prozess Titandioxid mit Kohlenstoff zu dotieren, und das kohlenstoffdotierte Titandioxid als Ausgangsmaterial für die Nanoröhrchensynthese im Hydrothermalverfahren zu verwenden. Für die so erhaltenen Nanoröhrchen konnte allerdings keine erhöhte Leitfähigkeit nachgewiesen werden.

### Der Erfindung zugrundeliegende Aufgabe

Der Erfindung liegt die Aufgabe zugrunde, die elektrische Leitfähigkeit von Titanoxidverbindungen, insbesondere von Nanostrukturen aus Titanoxidverbindungen und von als Ausgangsmaterial für die Nanostruktursynthese verwendeten Titanoxidverbindungen zu verbessern, um die Bereitstellung von Nanostrukturen insbesondere in Röhrchen- oder Röllchenform zu ermöglichen, die eine hohe photokatalytische Aktivität und/oder eine hohe Leitfähigkeit aufweisen.

### Erfindungsgemäße Lösung

Die Lösung der gestellten Aufgabe gelingt durch ein Verfahren zum Behandeln einer Titanoxidverbindung, wobei die Titanoxidverbindung zumindest Kohlenstoff, Stickstoff und/oder Wasserstoff und einer Temperatur zwischen 600 °C und 1200 °C ausgesetzt wird.

Eine mit einem dieser Verfahren behandelte Titanoxidverbindung enthält die Elemente Kohlenstoff, Stickstoff und/oder Wasserstoff in einer Menge, die dazu ausreicht, deren elektrische Leitfähigkeit im Vergleich zu einer unbehandelten Titanoxidverbindung signifikant zu beeinflussen. Es wurde festgestellt, dass diese Elemente nach der Behandlung Zwischengitterplätze im Titanoxidkristallgitter einnehmen, Sauerstoffatome in der Titanoxidverbindung ersetzen und/oder im Kristallverband der Titanoxidverbindung in Titancarbidstruktur und/oder in Form eines Mischkristalls aus der TiO₂-Phase und/oder der TiO-Phase und der TiC-Phase eingebettet sind. Diese Art der Einbettung bzw. Dotierung führt zu einer erhöhten elektrischen Leitfähigkeit der Titanoxidverbindung im Vergleich zur unbehandelten Titanoxidverbindung. Ein Teil der genannten Elemente kann außerdem in Form von amorphen und/oder kristallinen Einschlüssen in der Titanoxidverbindung enthalten sein, oder neben der Titanoxidverbindung in amorpher und/oder kristalliner Form vorliegen, beispielsweise als amorphe und/oder kristalline Partikel oder als amorphe und/oder kristalline Beschichtung der Titanoxidverbindung.

Die Lösung der gestellten Aufgabe gelingt ferner durch ein Verfahren zur Herstellung einer Nanostruktur aus einer Titanoxidverbindung, wobei eine Titanoxidverbindung mit dem vorstehend beschriebenen Verfahren behandelt wird und die so behandelte Titanoxidverbindung in einer alkalischen Lösung dispergiert wird.

Die Lösung der gestellten Aufgabe gelingt ebenfalls durch ein Verfahren zur Herstellung einer Nanostruktur aus einer Titanoxidverbindung, wobei die Titanoxidverbindung zumindest Kohlenstoff, Stickstoff und/oder Wasserstoff ausgesetzt wird und die so behandelte Titanoxidverbindung in einer alkalischen Lösung dispergiert wird.

Eine mit einem dieser Verfahren hergestellte röhrchen- oder röllchenförmige Nanostruktur aus einer Titanoxidverbindung kann die Elemente Kohlenstoff, Stickstoff und/oder Wasserstoff in einer Menge enthalten, die dazu ausreicht, deren elektrische Leitfähigkeit im Vergleich zu einer röhrchen- oder röllchenförmigen Nanostruktur aus einer unbehandelten Titanoxidverbindung signifikant zu beeinflussen. Es wurde dabei festgestellt, dass diese Elemente auch nach der Nanostruktursynthese in der gleichen kristallographischen Anordnung vorliegen wie nach der vorstehend beschriebenen Behandlung der Titanoxidverbindung, so dass auch die elektrische Leitfähigkeit der daraus synthetisierten Nanostruktur im Vergleich zu einer Nanostruktur aus einer unbehandelten Titanoxidverbindung erhöht ist.

Die Lösung der gestellten Aufgabe gelingt auch durch ein Verfahren zur Erhöhung der elektrischen Leitfähigkeit einer Nanostruktur aus einer Titanoxidverbindung, wobei die Nanostruktur einer Gasatmosphäre und einer Temperatur zwischen 200 °C und 700 °C ausgesetzt wird, wobei die Gasatmosphäre ein Inertgas und ein weiteres, zumindest Kohlenstoff, Stickstoff und/oder Wasserstoff enthaltendes Gas enthält, und wobei der Volumenanteil des weiteren Gases an der Gasatmosphäre zumindest 10 Volumenprozent beträgt.

Mit diesem Verfahren kann die elektrische Leitfähigkeit einer röhrchen- oder röllchenförmigen Nanostruktur aus einer Titanoxidverbindung weiter erhöht werden, indem wie vorstehend beschrieben Kohlenstoff-, Stickstoff- und/oder Wasserstoffatome in die Nanostruktur eingebracht werden. Dazu ist eine gewisse Mindesttemperatur erforderlich. Durch Einstellen einer geeigneten Maximaltemperatur kann dabei sichergestellt werden, dass nur ein möglichst geringer Anteil, vorzugsweise im Wesentlichen keine der so behandelten röhrchen- oder röllchenförmigen Nanostrukturen kollabieren und somit eine möglichst große spezifische Oberfläche erhalten bleibt. Alternativ kann mit diesem Verfahren durch Einstellen einer geeigneten Mindesttemperatur aus einer röhrchen- oder röllchenförmigen Nanostruktur aus einer Titanoxidverbindung ein elektrisch leitfähiges Nanoband hergestellt werden.

Die Lösung der gestellten Aufgabe gelingt ferner durch eine Nanostruktur aus einer Titanoxidverbindung, wobei die Nanostruktur eine Röhrchen- oder Röllchenform aufweist, zumindest Kohlenstoff, Stickstoff und/oder Wasserstoff enthält, wobei die Menge des Kohlenstoffs, Stickstoffs und/oder Wasserstoffs zumindest 2 Gew%, bezogen auf die Gesamtmasse der Nanostruktur, beträgt, und eine elektrische Leitfähigkeit bei Raumtemperatur von zumindest 10⁻³ S/cm aufweist.

Die Lösung der gestellten Aufgabe gelingt ebenfalls durch eine Nanostruktur aus einer Titanoxidverbindung, wobei die Nanostruktur eine Röhrchen- oder Röllchenform aufweist, zumindest Kohlenstoff, Stickstoff und/oder Wasserstoff enthält, wobei die Menge des Kohlenstoffs, Stickstoffs und/oder Wasserstoffs zumindest 2 Gew%, bezogen auf die Gesamtmasse der Nanostruktur, beträgt, und eine spezifische Oberfläche von zumindest 175 m²/g aufweist.

Derartige Nanostrukturen eignen sich aufgrund ihrer elektrischen Leitfähigkeit und/oder ihrer durch die Röhrchen- bzw. Röllchenform intrinsisch großen spezifischen Oberfläche besonders für Anwendungen als photokatalytische Materialien, selektive Membranen und dergleichen.

Die Lösung der gestellten Aufgabe gelingt außerdem durch eine Nanostruktur aus einer Titanoxidverbindung, wobei die Nanostruktur eine Bandform aufweist, zumindest Kohlenstoff, Stickstoff und/oder Wasserstoff enthält, wobei die Menge des Kohlenstoffs, Stickstoffs und/oder Wasserstoffs zumindest 2 Gew%, bezogen auf die Gesamtmasse der Nanostruktur, beträgt, und eine elektrische Leitfähigkeit bei Raumtemperatur von zumindest 10⁻³ S/cm aufweist.

Derartige Nanostrukturen eigen sich aufgrund ihrer elektrischen Leitfähigkeit besonders für Anwendungen als Elektrodenstrukturen, als Leiterbahnen mit Abmessungen im Nanometerbereich und dergleichen.

Insgesamt ermöglicht die Erfindung somit, die elektrische Leitfähigkeit von Titanoxidverbindung zu erhöhen und Nanostrukturen in Röhrchen-, Röllchen- oder Bandform aus einer Titanoxidverbindung bereitzustellen, die eine hohe photokatalytische Aktivität und/oder eine hohe Leitfähigkeit aufweisen.

Eine Titanoxidverbindung bzw. ein Titanoxidmaterial bezeichnet im Sinne der vorliegenden Erfindung sämtliche ein Titanoxid enthaltenden Verbindungen bzw. Materialien, insbesondere im festen Aggregatszustand. Insbesondere sind damit Titansuboxide, Titandioxid, Titandioxid enthaltende Verbindungen bzw. Materialien und Titanate, insbesondere Salze und Ester von Titansäuren, umfasst.

Im Sinne der Erfindung bezeichnet ein Pulver ein Gemenge aus Teilchen, Partikeln oder Körnern, wobei diese insbesondere keine Röhrchen- oder Röllchenform aufweisen. Die Teilchen, Partikel oder Körner können eine Kugelform aufweisen oder im Vergleich dazu unregelmäßig geformt sein. Die mittlere Korngröße des Pulvers bezeichnet einen aus einer Vielzahl von Teilchen, Partikeln oder Körnern ermittelten, mittleren Durchmesser der Teilchen, Partikel oder Körner. Der mittlere Durchmesser kann sich dabei auf einen Äquivalentdurchmesser beziehen, d.h. einen aus einer am Pulver ermittelten Eigenschaft erhaltenen Durchmesser, den ein kugelförmiges Teilchen, ein kugelförmiger Partikel oder ein kugelförmiges Korn mit der gleichen Eigenschaft hätte, beispielsweise ein volumenäquivalenter Kugeldurchmesser, ein oberflächenäquivalenter Kugeldurchmesser oder ein projektionsflächenäquivalenter Kugeldurchmesser.

Im Sinne der vorliegenden Erfindung bezeichnet einer Gasatmosphäre aussetzen das Einbringen einer Probe in eine Umgebung, die eine gasförmige Substanz enthält oder von einer gasförmigen Substanz durchströmt wird. Die Gasatmosphäre kann eine oder mehrere gasförmige Substanzen aufweisen (Gasgemisch). Eine gasförmige Substanz kann zusammengesetzt sein aus Einzelatomen eines chemischen Elements (beispielsweise He oder Ar), aus Molekülen aus einem chemischen Element (beispielsweise N₂) oder aus Molekülen aus verschiedenen chemischen Elementen (beispielsweise C₂H₂), und außerdem weitere chemische Elemente in Form einer Verunreinigung enthalten. Sofern nicht anders angegeben, beträgt der Reinheitsgrad von Gasen im Sinne der vorliegenden Erfindung, d.h. das relative Volumen oder das relative Gewicht der Einzelatome bzw. Moleküle des Gases am Gesamtvolumen bzw. Gesamtgewicht des betreffenden Gases, zumindest 99%, weiter vorzugsweise zumindest 99,5%, weiter vorzugsweise zumindest 99,9%, besonders vorzugsweise zumindest 99,99% und ganz besonders vorzugsweise zumindest 99,999%.

Im Sinne der Erfindung bezeichnet eine Angabe in Gewichtsprozent (auch Gew%) die relative Masse einer Komponente eines Stoffgemisches an der Gesamtmasse des Stoffgemisches. In gleicher Weise bezeichnet Volumenprozent (auch Vol%) das relative Volumen einer Komponente eines gasförmigen, flüssigen oder festen Stoffgemisches am Gesamtvolumen des Stoffgemisches, und Atomprozent (auch at%) die relative Atomanzahl einer Atomsorte an der Gesamtanzahl der Atome eines Stoffgemisches oder die relative Anzahl an Atomen einer Atomsorte mit einer bestimmten Eigenschaft an der Gesamtanzahl der im Stoffgemisch enthaltenen Atome dieser Atomsorte. Die Angabe eines Feststoffgehalts bezeichnet im Sinne der Erfindung den Massenanteil eines festen Stoffes relativ zum Volumen einer den Feststoff enthaltenen Flüssigkeit, und wird vorzugsweise in Gramm pro Liter (g/l) angegeben.

Im Sinne der Erfindung bezeichnet Atmosphärendruck einen Druck von 1013 mbar. Die Bezeichnung Normaldruck bedeutet einen Druck unter Standardlaborbedingungen, insbesondere einen Druck von 1000 mbar bei 25 °C Umgebungstemperatur.

Im Sinne der Erfindung umfasst die Bezeichnung elektrische Leitfähigkeit sowohl elektronische Leitung durch Elektronen wie auch ionische Leitung beispielsweise durch Protonen. Soweit nicht anders angegeben, bezieht sich die Bezeichnung Leitfähigkeit auf die elektrische Leitfähigkeit.

Im Sinne der Erfindung bedeutet spezifische Oberfläche einer Struktur die gesamte Oberfläche einer Struktur im Verhältnis zur Masse der Struktur. Die spezifische Oberfläche einer Struktur kann durch experimentelle Verfahren ermittelt oder aus der Form und den Abmessungen der Struktur abgeschätzt werden. Sofern nicht anders angegeben, beziehen sich Angaben zu spezifischen Oberflächen in der vorliegenden Erfindung auf nach dem BET-Verfahren mittels N₂-Physisorption gemessene Werte.

Demineralisiertes Wasser bezeichnet im Sinne der vorliegenden Erfindung deionisiertes Wasser (auch vollentsalztes Wasser genannt). Die elektrische Leitfähigkeit von demineralisiertem Wasser im Sinne der vorliegenden Erfindung bei Raumtemperatur beträgt höchstens 5 µS/cm, bevorzugt höchstens 1 µS/cm, besonders bevorzugt höchstens 0,1 µS/cm und ganz besonders bevorzugt höchstens 0,055 µS/cm.

Im Sinne der Erfindung bezeichnet Nanoröhrchen eine Nanostruktur mit im Wesentlichen hohlzylindrischer Form. Ein Nanoröllchen bezeichnet eine Nanostruktur, die durch ein- oder mehrmaliges Aufrollen einer Dünnschicht bzw. eines Films, oder mehrerer Lagen der Dünnschicht bzw. des Films entsteht. Nanoröhrchen und Nanoröllchen im Sinne der Erfindung können an ihren Enden verschlossen, teilweise verschossen oder offen sein. Eine Nanostruktur im Sinne der Erfindung ist ein Erzeugnis, dessen Struktur in zumindest einer Raumrichtung eine Abmessung im Nanometerbereich aufweist, vorzugsweise von höchstens 1000 nm, weiter vorzugsweise von höchstens 100 nm, besonders vorzugsweise von höchstens 50 nm und ganz besonders vorzugsweise von höchstens 10 nm. Beispielsweise ist ein Röhrchen mit einem äußeren Durchmesser von 10 nm und einer Länge von mehreren µm eine Nanostruktur im Sinne der Erfindung.

Im Sinne der Erfindung bedeutet die Bezeichnung Raumtemperatur eine Temperatur von 20 °C. Sofern nicht anders angegeben, beziehen sich in der vorliegenden Erfindung Angaben in Bezug auf die elektrische Leitfähigkeit auf Raumtemperaturwerte.

### Bevorzugte Ausgestaltung der Erfindung

Vorteilhafte Aus- und Weiterbildungen, welche einzeln oder in Kombination miteinander eingesetzt werden können, sind Gegenstand der abhängigen Ansprüche.

### Verfahren zum Behandeln einer Titanoxidverbindung

In einer bevorzugten Ausführungsform des erfindungsgemäßen Verfahrens zum Behandeln einer Titanoxidverbindung enthält die Titanoxidverbindung, nachdem sie den Elementen Kohlenstoff, Stickstoff und/oder Wasserstoff ausgesetzt wurde, eine Menge an Kohlenstoff, Stickstoff und/oder Wasserstoff in Höhe von zumindest 2 Gew%, bezogen auf die Gesamtmasse der Titanoxidverbindung, vorzugsweise von zumindest 4 Gew%, weiter vorzugsweise von zumindest 6 Gew%, besonders vorzugsweise von zumindest 10 Gew% und ganz besonders vorzugsweise von zumindest 15 Gew%. Weiter ist es bevorzugt, die Menge der genannten Elemente alternativ in Atomprozent anzugeben. In diesem Falle enthält die Titanoxidverbindung, nachdem sie den Elementen Kohlenstoff, Stickstoff und/oder Wasserstoff ausgesetzt wurde, eine Menge an Kohlenstoff, Stickstoff und/oder Wasserstoff in Höhe von zumindest 2 at%, bezogen auf die Gesamtzahl der Atome der Titanoxidverbindung, vorzugsweise von zumindest 5 at%, weiter vorzugsweise von zumindest 10 at%, besonders vorzugsweise von zumindest 20 at% und ganz besonders vorzugsweise von zumindest 30 at%. Nachdem die Titanoxidverbindung den Elementen Kohlenstoff, Stickstoff und/oder Wasserstoff ausgesetzt wurde, können die genannten Elemente darüber hinaus nicht nur in der Titanoxidverbindung selbst enthalten sein, sondern auch neben der Titanoxidverbindung vorliegen und diese beispielsweise umgeben, etwa in Form von amorphen und/oder kristallinen Partikeln aus den genannten Elementen oder in Form einer amorphen und/oder kristallinen, vollständigen oder teilweisen Beschichtung der Titanoxidverbindung. Der Gewichtsanteil der genannten Elemente, bezogen auf die Gesamtmasse der Titanoxidverbindung und der die Titanoxidverbindung wie vorstehend beschrieben umgebenden Elemente, beträgt dabei vorzugsweise zumindest 15 Gew%, weiter vorzugsweise zumindest 20 Gew%, weiter vorzugsweise zumindest 25 Gew%, weiter vorzugsweise zumindest 30 Gew%, besonders vorzugsweise zumindest 35 Gew%, und ganz besonders vorzugsweise zumindest 40 Gew%.

In einer weiter bevorzugten Ausführungsform des Verfahrens zum Behandeln einer Titanoxidverbindung wird die Titanoxidverbindung einer zumindest Kohlenstoff, Stickstoff und/oder Wasserstoff enthaltenden Gasatmosphäre bei einer Temperatur zwischen 600 °C und 1200 °C ausgesetzt. Dadurch können die Elemente Kohlenstoff, Stickstoff und/oder Wasserstoff besonders effizient Zwischengitterplätze im Titanoxidkristallgitter einnehmen, Sauerstoffatome in der Titanoxidverbindung ersetzen und/oder im Kristallverband der Titanoxidverbindung in Titancarbidstruktur und/oder als Mischkristalle aus der TiO₂-Phase und/oder der TiO-Phase und der TiC-Phase eingebettet werden. Vorzugsweise enthält die Gasatmosphäre ein Inertgas und ein weiteres, zumindest Kohlenstoff, Stickstoff und/oder Wasserstoff enthaltendes Gas, wobei vorzugsweise der Volumenanteil des weiteren Gases an der Gasatmosphäre zumindest 10 Volumenprozent beträgt. Durch Einstellen des Mischungsverhältnisses und/oder des Mengenverhältnisses des Inertgases im Vergleich zum weiteren Gas können die Eigenschaften der Titanoxidverbindung gezielt verändert werden, insbesondere durch Einstellung des Volumenanteils des weiteren Gases an der Gasatmosphäre. Durch eine Kombination von zumindest zwei Elementen aus Kohlenstoff, Stickstoff und Wasserstoff kann eine Kodotierung der Titanoxidverbindung erreicht werden. Vorzugsweise enthält das weitere Gas Moleküle aus Kohlenstoff, Stickstoff und/oder Wasserstoff, oder Kohlenstoff, Stickstoff und/oder Wasserstoff enthaltende Moleküle, wobei eine Reinheit des Gases in Bezug auf die Moleküle jeweils zumindest 99 Vol%, weiter vorzugsweise zumindest 99,5 Vol%, weiter vorzugsweise zumindest 99,9 Vol%, besonders vorzugsweise zumindest 99,99 Vol% und ganz besonders vorzugsweise zumindest 99,999 Vol% beträgt. Vorzugsweise ist das Inertgas N₂ und das weitere Gas Ethingas, wobei vorzugsweise der Volumenanteil des Ethingases an der Gasatmosphäre zumindest 10 Volumenprozent beträgt. Durch Verwendung von kohlenstoffhaltigen Gasen wie Ethingas ist es möglich, beispielsweise TiOₓC_{y}-Phasen mit 0 ≤ x < 2 und 0 < y ≤ 0,05 und/oder Mischkristalle aus der TiO₂-Phase und/oder der TiO-Phase und der TiC-Phase in der Titanoxidverbindung zu bilden, die eine im Vergleich zu Titandioxid erhöhte Leitfähigkeit aufweisen.

In einer weiter bevorzugten Ausführungsform des Verfahrens zum Behandeln einer Titanoxidverbindung ist der Druck in der Gasatmosphäre Atmosphärendruck. Im Vergleich zu einer Behandlung bei einem im Vergleich zum Atmosphärendruck erhöhten Druck ergibt sich dadurch der Vorteil eines apparativ einfach darstellbaren Verfahrens. In einer weiter bevorzugten Ausführungsform des Verfahrens zum Behandeln einer Titanoxidverbindung liegt die Titanoxidverbindung als Titandioxidverbindung mit einem Titandioxidgehalt von zumindest 99,5 Gewichtsprozent, bezogen auf das Gesamtgewicht der Titandioxidverbindung vor. Vorzugsweise liegt die Titanoxidverbindung weiter als Titandioxid mit Anatas- und/oder Rutil-Modifikation vor. Insbesondere kann die Titanoxidverbindung als AEROXIDE TiO₂ P25 vorliegen (AEROXIDE ist eine eingetragene Marke der Evonik Degussa GmbH). Vorzugsweise liegt die Titanoxidverbindung ferner als Pulver vor, weiter vorzugsweise als Titandioxidpulver und besonders vorzugsweise als Titandioxidpulver mit einem Titandioxidgehalt von zumindest 99,5 Gewichtsprozent, bezogen auf das Gesamtgewicht des Pulvers. Ferner ist bevorzugt, dass das Pulver in Form von Partikeln, Teilchen oder Körnern, vorzugsweise in Form von im Wesentlichen kugelförmigen Partikeln, Teilchen oder Körnern vorliegt. Vorzugsweise beträgt die mittlere Korngröße des Pulvers zwischen 2 nm und 1000 nm. Vorzugsweise beträgt die mittlere Korngröße höchstens 100 nm, besonders vorzugsweise höchstens 50 nm, besonders vorzugsweise höchstens 25 nm. Ganz besonders vorzugsweise beträgt die mittlere Korngröße zwischen 20 nm und 25 nm. Weiter liegt die Titanoxidverbindung vorzugsweise in einer Mindestmenge vor. Die Mindestmenge beträgt vorzugsweise 0,1 g, weiter vorzugsweise 1 g, besonders vorzugsweise 10 g und ganz besonders vorzugsweise 100 g.

Im erfindungsgemäßen Verfahren zum Behandeln einer Titanoxidverbindung können durch Einstellen einer geeigneten Temperatur die Eigenschaften der Titanoxidverbindung gezielt verändert werden, insbesondere der Anteil der Elemente Kohlenstoff, Stickstoff und/oder Wasserstoff, die nach der Behandlung Zwischengitterplätze im Titanoxidkristallgitter einnehmen, Sauerstoffatome in der Titanoxidverbindung ersetzen und/oder im Kristallverband der Titanoxidverbindung in Titancarbidstruktur und/oder als Mischkristalle aus der TiO₂-Phase und/oder der TiO-Phase und der TiC-Phase eingebettet sind im Vergleich zum Anteil der genannten Elemente, die in Form von amorphen und/oder kristallinen Einschlüssen in der Titanoxidverbindung enthalten sind oder wie vorstehend beschrieben neben der Titanoxidverbindung in amorpher und/oder kristalliner Form vorliegen. Insbesondere nimmt mit steigender Temperatur der Anteil der genannten Elemente zu, die neben der Titanoxidverbindung neben der Titanoxidverbindung in amorpher und/oder kristalliner Form vorliegen und somit nicht in der behandelten Titanoxidverbindung selbst enthalten sind. Die Temperatur beträgt vorzugsweise zumindest 700 °C, vorzugsweise zumindest 800 °C, weiter vorzugsweise zumindest 900 °C, weiter vorzugsweise 1000 °C. Vorzugsweise ist die Temperatur jedoch nicht höher als 1050 °C, im Hinblick auf die vorstehend erwähnte Zunahme des Anteils der genannten Elemente, die neben der Titanoxidverbindung neben der Titanoxidverbindung in amorpher und/oder kristalliner Form vorliegen. Die Zeitspanne, in der die Temperatur anliegt, kann ebenfalls zur Veränderung von deren Eigenschaften eingestellt werden. Vorzugsweise erfolgt die Temperaturbehandlung in einer Zeitspanne von 5 min bis 15 min, besonders vorzugsweise 8 min bis 12 min, besonders vorzugsweise 9 min bis 11 min, und besonders vorzugsweise für 10 min.

### Verfahren zur Herstellung einer Nanostruktur aus einer Titanoxidverbindung

In einer bevorzugten Ausführungsform des Verfahrens zur Herstellung einer Nanostruktur, wobei die Titanoxidverbindung zumindest Kohlenstoff, Stickstoff und/oder Wasserstoff ausgesetzt wird und die so behandelte Titanoxidverbindung in einer alkalischen Lösung dispergiert wird, liegt die Titanoxidverbindung als Titandioxidverbindung mit einem Titandioxidgehalt von zumindest 99,5 Gewichtsprozent, bezogen auf das Gesamtgewicht der Titandioxidverbindung vor. Vorzugsweise liegt die Titanoxidverbindung weiter als Titandioxid mit Anatas- und/oder Rutil-Modifikation vor. Insbesondere kann die Titanoxidverbindung als AEROXIDE TiO₂ P25 vorliegen (AEROXIDE ist eine eingetragene Marke der Evonik Degussa GmbH). Vorzugsweise liegt ferner sowohl die Titanoxidverbindung als auch die behandelte Titanoxidverbindung als Pulver vor, weiter vorzugsweise als Titandioxidpulver. Ferner ist bevorzugt, dass das Pulver in Form von Partikeln, Teilchen oder Körnern, vorzugsweise in Form von im Wesentlichen kugelförmigen Partikeln, Teilchen oder Körnern vorliegt. Vorzugsweise beträgt die mittlere Korngröße des Pulvers zwischen 2 nm und 1000 nm. Vorzugsweise beträgt die mittlere Korngröße höchstens 100 nm, besonders vorzugsweise höchstens 50 nm, besonders vorzugsweise höchstens 25 nm. Ganz besonders vorzugsweise beträgt die mittlere Korngröße zwischen 20 nm und 25 nm.

In einer bevorzugten Ausführungsform der Verfahren zur Herstellung einer Nanostruktur aus einer Titanoxidverbindung ist die alkalische Lösung eine NaOH-Lösung. Durch Verwendung einer NaOH-Lösung können Nanoröhrchen oder Nanoröllchen besonders effizient gebildet werden. Außerdem sind solchermaßen synthetisierte Nanoröhrchen oder Nanoröllchen einem nachstehend beschriebenen Ionenaustauschverfahren zugänglich, in dem synthesebedingt in den Röhrchen- oder Röllchenwänden eingelagerte Natriumionen gegen Protonen ausgetauscht werden können. Dadurch kann die Nanostruktur für eine Ionenleitung (d.h. als Protonenleiter) eingerichtet werden. Die Molarität der NaOH-Lösung kann ferner eingestellt werden, um die spezifische Oberfläche der Nanoröhrchen oder Nanoröllchen zu beeinflussen. Besonders niedrige und besonders hohe Molaritäten resultieren dabei in einer vergleichsweise geringen spezifischen Oberfläche. Ein gutes Ergebnis bezüglich einer großen spezifischen Oberfläche kann erreicht werden, wenn eine zumindest 8 molare und höchstens 12 molare NaOH-Lösung, vorzugsweise eine zumindest 9 molare und höchstens 11 molare NaOH-Lösung, und besonders vorzugsweise eine 10 molare NaOH-Lösung verwendet wird.

In einer weiter bevorzugten Ausführungsform der Verfahren zur Herstellung einer Nanostruktur aus einer Titanoxidverbindung wird die durch das Dispergieren erhaltene Dispersion einer Temperatur von zumindest 80 °C ausgesetzt. Durch Einstellen einer geeigneten Temperatur kann die Form und/oder die spezifische Oberfläche der Nanostruktur eingestellt werden. Vorzugsweise werden Nanostrukturen in Röhrchen- oder Röllchenform mit einer spezifischen Oberfläche von zumindest 300 m²/g, vorzugsweise von zumindest 340 m²/g und besonders vorzugsweise von zumindest 380 m²/g hergestellt. Ein bevorzugter Temperaturbereich hierzu ist eine Temperatur zwischen 95 °C und 125 °C, besonders bevorzugt zwischen 100 °C und 120 °C.

In einer weiter bevorzugten Ausführungsform der Verfahren zur Herstellung einer Nanostruktur aus einer Titanoxidverbindung wird die Dispersion der Temperatur von zumindest 80 °C unter Laborbedingungen ausgesetzt, d.h. die Dispersion wird gegenüber der Umgebung nicht unter Druck gesetzt. Dadurch kann das Verfahren auf einfache Weise und ohne aufwändige Herstellungsvorrichtungen wie beispielsweise Autoklaven durchgeführt werden.

In einer weiter bevorzugten Ausführungsform der Verfahren zur Herstellung einer Nanostruktur aus einer Titanoxidverbindung umfasst das Verfahren weiter das oben erwähnte Ionenaustauschverfahren. In diesem Verfahren wird eine Ausfällung aus der durch das Dispergieren erhaltenen Dispersion extrahiert, und die extrahierte Ausfällung wird in HCl-Lösung dispergiert. Die Ausfällung enthält, vorzugsweise nahezu ausschließlich, Nanostrukturen aus der Titanoxidverbindung in Form von aneinander ausgerichteten Dünnschichten oder Filmen und/oder Nanoröhrchen oder Nanoröllchen. Durch Dispergieren der Ausfällung in HCl-Lösung können synthesebedingt in den Röhrchen- oder Röllchenwänden eingelagerte Ionen aus der alkalischen Lösung, beispielsweise Natriumionen bei Verwendung der oben beschriebenen NaOH-Lösung, gegen Protonen ausgetauscht werden. Mit dem Ionenaustauschverfahren ist es beispielsweise möglich, in der Nanostruktur eine Titanoxidphase mit der Zusammensetzung H₂ₘTiₙO₂ₙ₊ₘ mit 0 ≤ m ≤ 1 und 1 ≤ n ≤ 6 zu bilden. Diese Zusammensetzung kann von Nanostruktur zu Nanostruktur variieren. Wie oben beschrieben weisen die mit dem Ionenaustauschverfahren behandelten Nanostrukturen Ionenleitfähigkeit auf, d.h. die elektrische Leitfähigkeit der Nanostrukturen kann verbessert werden. Typische Werte für die so erreichbare elektrische Leitfähigkeit sind zumindest 10⁻³ S/cm im Vergleich zu typischerweise 10⁻⁶ S/cm für röhrchen- oder röllchenförmige Nanostrukturen, die aus einer Titanoxidverbindung synthetisiert sind, die nicht zumindest Kohlenstoff, Stickstoff und/oder Wasserstoff ausgesetzt wurde. Vorzugsweise ist die HCl-Lösung eine 0,1 molare Lösung. Vorzugsweise wird die Ausfällung aus der der Temperatur von zumindest 80 °C ausgesetzten Dispersion extrahiert. Weiter wird die extrahierte Ausfällung vorzugsweise zumindest einmalig in demineralisiertem Wasser dispergiert und sodann filtriert, bevor sie in HCl-Lösung dispergiert wird. Vorzugsweise schließt sich an die Dispersion in HCl-Lösung eine Filtration an, und das erhaltene Filtrat wird verzugsweise erneut zumindest einmalig in demineralisiertem Wasser dispergiert und sodann filtriert. Vorzugsweise wird das Dispergieren und Filtrieren vor dem Dispergieren in HCl-Lösung und das Dispergieren und Filtrieren nach dem Dispergieren in HCl-Lösung wiederholt, bis das jeweilige Filtrat eine elektrische Leitfähigkeit aufweist, die kleiner als ein oder gleich einem vorbestimmten ersten bzw. zweiten Schwellwert ist, wobei der erste Schwellwert größer als der zweite Schwellwert ist. Vorzugsweise beträgt der erste Schwellwert 20 µS/cm und der zweite Schwellwert 2 µS/cm.

In einer weiter bevorzugten Ausführungsform der Verfahren zur Herstellung einer Nanostruktur aus einer Titanoxidverbindung wird die Zeitspanne, in der die Temperatur an der Dispersion anliegt, eingestellt, um die spezifische Oberfläche einzustellen. Besonders große spezifische Oberflächen sind erreichbar, wenn, insbesondere bei den vorstehend beschriebenen Ausführungsformen des Verfahrens, die Temperaturbehandlung über eine Dauer von zumindest 15 h, vorzugsweise zumindest 20 h, besonders vorzugsweise zumindest 25 h erfolgt.

In einer weiter bevorzugten Ausführungsform der Verfahren zur Herstellung einer Nanostruktur aus einer Titanoxidverbindung beträgt der Feststoffgehalt der Titanoxidverbindung in der durch das Dispergieren erhaltenen Dispersion bei den vorstehend beschriebenen Ausführungsformen des Verfahrens zumindest 0,1 g/l, vorzugsweise zumindest 0,25 g/l, weiter vorzugsweise zumindest 1 g/l, weiter vorzugsweise zumindest 2 g/l und, besonders vorzugsweise zumindest 2,5 g/l und ganz besonders vorzugsweise zumindest 3 g/l.

### Verfahren zur Erhöhung der elektrischen Leitfähigkeit einer Nanostruktur aus einer Titanoxidverbindung

In einer bevorzugten Ausführungsform des Verfahrens zur Erhöhung der elektrischen Leitfähigkeit einer Nanostruktur aus einer Titanoxidverbindung ist das Inertgas N₂ und das weitere Gas Ethingas. Wie vorstehend in Bezug auf das Verfahren zum Behandeln einer Titanoxidverbindung beschrieben ist es durch Verwendung von kohlenstoffhaltigen Gasen wie Ethingas möglich, beispielsweise TiOₓC_{y}-Phasen mit 0 ≤ x < 2 und 0 < y ≤ 0,05 und/oder Mischkristalle aus der TiO₂-Phase und/oder der TiO-Phase und der TiC-Phase in der Titanoxidverbindung zu bilden, die eine im Vergleich zu TiO₂ erhöhte Leitfähigkeit aufweisen.

In einer weiter bevorzugten Ausführungsform des Verfahrens zur Erhöhung der elektrischen Leitfähigkeit einer Nanostruktur aus einer Titanoxidverbindung beträgt der Volumenanteil des weiteren Gases an der Gasatmosphäre zumindest 20 Volumenprozent, weiter vorzugsweise zumindest 30 Volumenprozent, besonders vorzugsweise zumindest 40 Volumenprozent und ganz besonders vorzugsweise zumindest 50 Volumenprozent.

In einer weiter bevorzugten Ausführungsform des Verfahrens zur Erhöhung der elektrischen Leitfähigkeit einer Nanostruktur aus einer Titanoxidverbindung beträgt die Temperatur, der die Nanostruktur ausgesetzt wird, 300 °C oder mehr, um eine Einbettung von Kohlenstoff, Stickstoff und/oder Wasserstoff in die Nanostruktur zu erreichen. Vorzugsweise beträgt die Temperatur 350 °C oder mehr, besonders vorzugsweise 375 °C oder mehr, und ganz besonders vorzugsweise 400 °C oder mehr. In diesem Temperaturbereich können zum Beispiel die oben erwähnten TiOₓC_{y}-Phasen oder Mischkristalle gebildet werden, ohne dass die Röhrchen- oder Röllchenform der Nanostruktur vollständig kollabiert. Bevorzugt ist ferner eine Temperatur von 600 °C oder weniger, besonders bevorzugt von 500 °C oder weniger, und ganz besonders bevorzugt von 425 °C oder weniger vorgesehen, um die Röhrchen- oder Röllchenform der Nanostruktur und deren spezifische Oberfläche möglichst wenig zu verändern. Besonders bevorzugt ist in dieser Hinsicht im Hinblick auf eine möglichst große spezifische Oberfläche ein Temperaturbereich zwischen 375 °C und 400 °C, ganz besonders bevorzugt zwischen 380 °C und 390 °C, und im Hinblick auf eine möglichst große elektrische Leitfähigkeit ein Temperaturbereich zwischen 400 °C und 425 °C, besonders bevorzugt zwischen 410 °C und 420 °C. Andererseits kann eine vergleichsweise hohe Temperatur gezielt dazu eingesetzt werden, eine Nanostruktur in Form eines Bandes herzustellen. Vorzugsweise wird dazu eine Temperatur von zumindest 450 °C, bevorzugt von zumindest 500 °C weiter bevorzugt von zumindest 550 °C und ganz besonders bevorzugt von zumindest 600 °C eingesetzt. Vorzugsweise wird die Nanostruktur der Temperatur für zumindest 80 min, bevorzugt zumindest 150 min, und besonders bevorzugt zumindest 210 min ausgesetzt, vorzugsweise jedoch maximal für 300 min und besonders vorzugsweise für maximal 240 min.

Es ist außerdem bevorzugt, das beschriebene Verfahren zur Erhöhung der elektrischen Leitfähigkeit auf eine unter Verwendung des oben beschriebenen Verfahrens zur Herstellung einer Nanostruktur aus einer Titanoxidverbindung hergestellte Nanostruktur anzuwenden, um deren elektrische Leitfähigkeit weiter zu erhöhen.

### Nanostruktur aus einer Titanoxidverbindung mit Röhrchen- oder Röllchenform

In einer bevorzugten Ausführungsform der Nanostruktur aus einer Titanoxidverbindung mit Röhrchen- oder Röllchenform und einer elektrischen Leitfähigkeit bei Raumtemperatur von zumindest 10⁻³ S/cm beträgt die Menge des in der Nanostruktur enthaltenen Kohlenstoffs, Stickstoffs und/oder Wasserstoffs zumindest 4 Gew%, bezogen auf die Gesamtmasse der Nanostruktur, vorzugsweise zumindest 6 Gew%, weiter vorzugsweise zumindest 10 Gew%, besonders vorzugsweise zumindest 15 Gew% und ganz besonders vorzugsweise zumindest 20 Gew%. Weiter ist es bevorzugt, die Menge der genannten Elemente alternativ in Atomprozent anzugeben. In diesem Falle enthält die Nanostruktur eine Menge an Kohlenstoff, Stickstoff und/oder Wasserstoff in Höhe von zumindest 2 at%, bezogen auf die Gesamtzahl der Atome der Titanoxidverbindung, vorzugsweise von zumindest 5 at%, weiter vorzugsweise von zumindest 10 at%, besonders vorzugsweise von zumindest 20 at% und ganz besonders vorzugsweise von zumindest 30 at%. Vorzugsweise beträgt ferner die elektrische Leitfähigkeit zumindest 5×10⁻³ S/cm, besonders vorzugsweise zumindest 10⁻² S/cm und ganz besonders vorzugsweise zumindest 5×10⁻² S/cm.

In einer weiter bevorzugten Ausführungsform dieser Nanostruktur weist die Nanostruktur eine spezifische Oberfläche bei Raumtemperatur von zumindest 175 m²/g auf. Die spezifische Oberfläche beträgt vorzugsweise zumindest 200 m²/g, weiter vorzugsweise zumindest 250 m²/g, weiter vorzugsweise zumindest 300 m²/g, besonders vorzugsweise zumindest 340 m²/g und ganz besonders vorzugsweise zumindest 400 m²/g. Eine große spezifische Oberfläche stellt eine z.B. für eine durch die erfindungsgemäß gegebene elektrische Leitfähigkeit mögliche photokatalytische Reaktion vorteilhafte, große Reaktionsfläche zur Verfügung.

In einer bevorzugten Ausführungsform der Nanostruktur aus einer Titanoxidverbindung mit Röhrchen- oder Röllchenform und einer spezifischen Oberfläche bei Raumtemperatur von zumindest 175 m²/g beträgt die Menge des in der Nanostruktur enthaltenen Kohlenstoffs, Stickstoffs und/oder Wasserstoffs zumindest 4 Gew%, bezogen auf die Gesamtmasse der Nanostruktur, vorzugsweise zumindest 6 Gew%, weiter vorzugsweise zumindest 10 Gew%, besonders vorzugsweise zumindest 15 Gew% und ganz besonders vorzugsweise zumindest 20 Gew%. Weiter ist es bevorzugt, die Menge der genannten Elemente alternativ in Atomprozent anzugeben. In diesem Falle enthält die Nanostruktur eine Menge an Kohlenstoff, Stickstoff und/oder Wasserstoff in Höhe von zumindest 2 at%, bezogen auf die Gesamtzahl der Atome der Titanoxidverbindung, vorzugsweise von zumindest 5 at%, weiter vorzugsweise von zumindest 10 at%, besonders vorzugsweise von zumindest 20 at% und ganz besonders vorzugsweise von zumindest 30 at%. Vorzugsweise beträgt ferner die spezifische Oberfläche zumindest 200 m²/g, weiter vorzugsweise zumindest 250 m²/g, weiter vorzugsweise zumindest 300 m²/g, besonders vorzugsweise zumindest 340 m²/g und ganz besonders vorzugsweise zumindest 400 m²/g.

In einer weiter bevorzugten Ausführungsform dieser Nanostruktur weist die Nanostruktur eine elektrische Leitfähigkeit von zumindest 10⁻³ S/cm auf. Die elektrische Leitfähigkeit beträgt vorzugsweise zumindest 5×10⁻³ S/cm, besonders vorzugsweise zumindest 10⁻² S/cm und ganz besonders vorzugsweise zumindest 5×10⁻² S/cm. Eine hohe elektrische Leitfähigkeit stellt eine z.B. für eine durch die erfindungsgemäß gegebene intrinsische große spezifische Oberfläche der Nanostruktur mögliche photokatalytische Reaktion vorteilhafte, große Anzahl an photoinduzierbaren Ladungsträgern (z.B. Elektron-Loch-Paaren) zur Verfügung.

In einer weiter bevorzugten Ausführungsform der Nanostrukturen mit Röhrchen- oder Röllchenform enthält die Nanostruktur eine Kristallstruktur, die derjenigen einer Verbindung mit der Zusammensetzung TiO_{2-y-x}Rₓ mit 0 < x ≤ 0,05 und 0 ≤ y ≤ 1 entspricht, wobei R Kohlenstoff, Stickstoff oder Wasserstoff darstellt. Die Nanostruktur kann ganz oder teilweise in dieser Kristallstruktur vorliegen. Der Anteil der in dieser Kristallstruktur vorliegenden Atome der Atomsorte R relativ zur Gesamtatomanzahl der Atomsorte R in der Nanostruktur beträgt vorzugsweise zumindest 1 at%, weiter vorzugsweise zumindest 5 at%, weiter vorzugsweise zumindest 10 at%, besonders vorzugsweise zumindest 20 at%, ganz besonders vorzugsweise zumindest 25 at%. Damit wird eine im Vergleich zu Titandioxid besonders erhöhte elektrische Leitfähigkeit der Nanostruktur bereitgestellt. Vorzugsweise enthält die Nanostruktur zumindest zwei Elemente aus Kohlenstoff, Stickstoff und Wasserstoff (Kodotierung). Dadurch kann die elektrische Leitfähigkeit besonders effizient erhöht werden. Ferner kann die Nanostruktur zudem eine Phase einer Titanoxidverbindung mit der Zusammensetzung H₂ₘTiₙO₂ₙ₊ₘ mit 0 ≤ m ≤ 1 und 1 ≤ n ≤ 6 enthalten, wie sie durch das vorgenannte Ionenaustauschverfahren erreichbar ist. Die Nanostruktur kann ganz oder teilweise aus dieser Phase bestehen.

In einer weiter bevorzugten Ausführungsform der Nanostrukturen mit Röhrchen- oder Röllchenform enthält die Nanostruktur Kohlenstoff, wobei sich der enthaltene Kohlenstoffs auf Zwischengitterplätzen und/oder Gitterplätzen der Nanostruktur befindet und/oder in einer Titancarbidstruktur und/oder in Form eines Mischkristalls aus der TiO₂-Phase und/oder der TiO-Phase und der TiC-Phase vorliegt, d.h. ein oder mehrere Teile der Nanostruktur liegen in einer Kristallstruktur vor, die einem Titancarbidkristall oder dem genannten Mischkristall entspricht. Dadurch wird eine im Vergleich zu Titandioxid besonders erhöhte elektrische Leitfähigkeit der Nanostruktur bereitgestellt.

In einer weiter bevorzugten Ausführungsform der Nanostrukturen mit Röhrchen- oder Röllchenform beträgt ein äußerer Durchmesser der Nanostruktur 3 nm oder mehr. Vorzugsweise beträgt der äußere Durchmesser 100 nm oder weniger. Vorzugsweise beträgt der äußere Durchmesser der Nanostruktur zumindest 7 nm und höchstens 10 nm. Vorzugsweise beträgt der innere Durchmesser der Nanostruktur zumindest 5 nm und höchstens 7 nm. Eine Länge der Nanostruktur beträgt vorzugsweise zumindest 10 nm, vorzugsweise zumindest 50 nm, vorzugsweise zumindest 100 nm, besonders vorzugsweise zumindest 500 nm und ganz besonders vorzugsweise zumindest 1 µm.

### Nanostruktur aus einer Titanoxidverbindung mit Bandform

In einer bevorzugten Ausführungsform der Nanostruktur aus einer Titanoxidverbindung mit Bandform weist die Nanostruktur eine spezifische Oberfläche zwischen 5 m²/g und 150 m²/g auf, vorzugsweise zwischen 50 m²/g und 100 m²/g.

In einer weiter bevorzugten Ausführungsform der Nanostruktur mit Bandform enthält die Nanostruktur eine Kristallstruktur, die derjenigen einer Verbindung mit der Zusammensetzung TiO_{2-y-x}Rₓ mit 0 < x ≤ 0,05 und 0 ≤ y ≤ 1 entspricht, wobei R Kohlenstoff, Stickstoff oder Wasserstoff darstellt. Die Nanostruktur kann ganz oder teilweise in dieser Kristallstruktur vorliegen. Der Anteil der in dieser Kristallstruktur vorliegenden Atome der Atomsorte R relativ zur Gesamtatomanzahl der Atomsorte R in der Nanostruktur beträgt vorzugsweise zumindest 1 at%, weiter vorzugsweise zumindest 5 at%, weiter vorzugsweise zumindest 10 at%, besonders vorzugsweise zumindest 20 at%, ganz besonders vorzugsweise zumindest 25 at%. Damit wird eine im Vergleich zu TiO₂ besonders erhöhte elektrische Leitfähigkeit der Nanostruktur bereitgestellt. Vorzugsweise enthält die Nanostruktur zumindest zwei Elemente aus Kohlenstoff, Stickstoff und Wasserstoff (Kodotierung). Dadurch kann die elektrische Leitfähigkeit besonders effizient erhöht werden. Ferner kann die Nanostruktur zudem eine Phase einer Titanoxidverbindung mit der Zusammensetzung H₂ₘTiₙO₂ₙ₊ₘ mit 0 ≤ m ≤ 1 und 1 ≤ n ≤ 6 enthalten, wie sie durch das vorgenannte Ionenaustauschverfahren erreichbar ist. Die Nanostruktur kann ganz oder teilweise aus dieser Phase bestehen.

In einer weiter bevorzugten Ausführungsform der Nanostruktur mit Bandform enthält die Nanostruktur Kohlenstoff, wobei der enthaltene Kohlenstoff auf Zwischengitterplätzen und/oder Gitterplätzen der Nanostruktur befindet und/oder in einer Titancarbidstruktur und/oder in Form eines Mischkristalls aus der TiO₂-Phase und/oder der TiO-Phase und der TiC-Phase vorliegt, d.h. ein oder mehrere Teile der Nanostruktur liegen in einer Kristallstruktur vor, die einem Titancarbidkristall oder dem genannten Mischkristall entspricht. Dadurch wird eine im Vergleich zu TiO₂ besonders erhöhte elektrische Leitfähigkeit der Nanostruktur bereitgestellt.

In einer weiter bevorzugten Ausführungsform der Nanostruktur mit Bandform beträgt eine Breite der Nanostruktur in einer Richtung, die senkrecht auf die Banderstreckungsrichtung ist, 10 nm oder mehr, vorzugsweise 50 nm oder mehr, besonders vorzugsweise 100 nm oder mehr und ganz besonders vorzugsweise 1000 nm oder mehr. Vorzugsweise beträgt die Dicke der Nanostruktur senkrecht zur Banderstreckungsrichtung und senkrecht zur Richtung der Breite der Nanostruktur 5 nm oder mehr, vorzugsweise 10 nm oder mehr, besonders vorzugsweise 100 nm und ganz besonders vorzugsweise 1000 nm oder mehr. Eine Länge der Nanostruktur beträgt vorzugsweise zumindest 10 nm, vorzugsweise zumindest 50 nm, vorzugsweise zumindest 100 nm, besonders vorzugsweise zumindest 500 nm und ganz besonders vorzugsweise zumindest 1 µm.

In einer weiter bevorzugten Ausführungsform der Nanostruktur mit Röhrchen-, Röllchen oder Bandform ist die Nanostruktur unter Verwendung eines der vorstehend beschriebenen Verfahren zur Herstellung einer Nanostruktur und/oder zur Erhöhung der elektrischen Leitfähigkeit einer Nanostruktur hergestellt.

### Kurzbeschreibung der Zeichnungen

Weitere vorteilhafte Ausgestaltungen werden nachfolgend an Hand von in den Zeichnungen dargestellten Ausführungsbeispielen, auf welche die Erfindung jedoch nicht beschränkt ist, näher beschrieben.

Die Bezugszeichen in sämtlichen Ansprüchen haben keine einschränkende Wirkung, sondern sollen lediglich deren Lesbarkeit verbessern.

Es zeigen schematisch:
- Fig. 1: Eine Behandlungsvorrichtung zur Behandlung einer Titanoxidverbindung;
- Fig. 2: eine Nanostruktursynthesevorrichtung;
- Fig. 3: ein Diagramm, das den Ablauf des Ionenaustauschverfahrens illustriert;
- Fig. 4: ein Diagramm, das spezifische Oberflächen und elektrische Leitfähigkeiten von Nanostrukturen aus Titanoxidverbindungen illustriert, die dem Verfahren zum Behandeln einer Titanoxidverbindung unterzogen wurden;
- Fig. 5: ein Diagramm, das spezifische Oberflächen und elektrische Leitfähigkeiten von Nanostrukturen illustriert, die dem Verfahren zur Erhöhung der elektrischen Leitfähigkeit unterzogen wurden.

### Ausführliche Beschreibung anhand von Ausführungsbeispielen

Bei der nachfolgenden Beschreibung bevorzugter Ausführungsformen der vorliegenden Erfindung bezeichnen gleiche Bezugszeichen gleiche oder vergleichbare Komponenten.

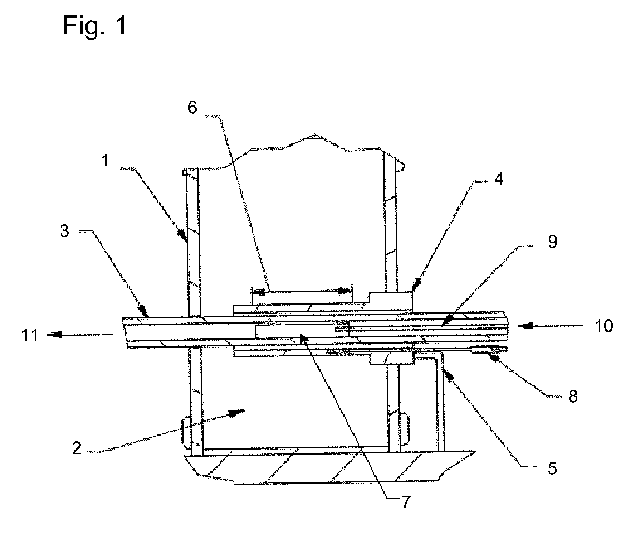

Das erfindungsgemäße Verfahren zum Behandeln einer Titanoxidverbindung erfolgt in diesem Ausführungsbeispiel mithilfe der in Fig. 1 gezeigten Behandlungsvorrichtung, auch Minireaktor genannt. Die Behandlungsvorrichtung umfasst ein Isolationsgehäuse 1, das ein feuerfestes Material 2 enthält. Im Isolationsgehäuse 1 ist ein Keramikrohr 3 herausziehbar angeordnet und gegen die Umgebung des Isolationsgehäuses mit einem feuerfesten Material (nicht gezeigt) abgedichtet. Das Keramikrohr 3 hat in diesem Ausführungsbeispiel einen inneren Durchmesser von 6 mm. Im Isolationsgehäuse 1 ist ferner eine Heizvorrichtung 4, beispielsweise eine elektrische Hochtemperaturheizung, vorgesehen, die das Keramikrohr 3 bezüglich dessen Längsrichtung teilweise und in dessen Querschnitt vollständig umfasst, wobei das Keramikrohr 3 gegenüber der Heizvorrichtung 4 ebenfalls herausziehbar angeordnet ist. Die Heizvorrichtung ist über eine Ansteuerung 5, beispielsweise eine elektrische Versorgungsleitung, ansteuerbar. Im Betrieb bildet ein Bereich 6 des Keramikrohrs, der von der Heizvorrichtung 4 umgegeben ist, einen Heizbereich, in den eine Probe 7, erfindungsgemäß eine Titanoxidverbindung, eingebracht werden kann. In diesem Ausführungsbeispiel hat der Heizbereich 6 in Längsrichtung des Keramikrohrs 3 eine Ausdehnung von wenigstens 30 mm. Zur Überwachung der im Betrieb in der Heizvorrichtung 4 erreichten Temperatur sowie der Temperatur, der die Probe 7 im Betrieb ausgesetzt ist, ist ein Heizvorrichtungstemperaturfühler 8 und ein Probentemperaturfühler 9 vorgesehen. Die Probe kann über die Gaszufuhr 10 einer Gasatmosphäre unter einem vorbestimmten Druck ausgesetzt werden. Die Behandlungsvorrichtung umfasst hierzu eine nicht gezeigte Regelungsvorrichtung, mit der ein vorbestimmter Gasdurchfluss durch das Keramikrohr 3 gesteuert werden kann. Das zugeführte Gas wird über einen Gasaustritt 11 zu einer nicht gezeigten Waschflasche abgeführt. Zur Ansteuerung der Heizvorrichtung 4 und der Gasdurchflussregelungsvorrichtung ist ein nicht gezeigtes Steuergerät vorgesehen, das mit der Gasdurchflussregelungsvorrichtung und der Heizvorrichtung in Wirkverbindung steht.

Zur erfindungsgemäßen Behandlung wird eine Titanoxidverbindung als Probe 7 in den Heizbereich 6 eingebracht. Die Probe 7 wird durch entsprechende Regelung des Heizgeräts 4 und der Gasdurchflussregelungsvorrichtung einer Gasatmosphäre und einer Temperatur, beispielsweise wie in der untenstehenden Tabelle 1 angegeben, ausgesetzt. Dabei wird vorzugsweise eine Aufheiz- bzw. Abkühlrampe wie in Tabelle 1 angegeben für das Erreichen der Zieltemperatur eingestellt. Die Titanoxidverbindung ist in den in Tabelle 1 gezeigten Fällen jeweils ein AEROXID TiO₂ P25 - Pulver, erhältlich von EVONIK Industries AG, mit einer Reinheit von 99,5% (Gewichtsprozent TiO₂ im Vergleich zum Gewicht des Pulverprodukts). Die Gasatmosphäre ist vorzugsweise gebildet aus Ethingas in dem in Tabelle 1 angegeben Volumenanteil an der Gasatmosphäre, und der übrige Teil ist vorzugsweise aus dem Inertgas N₂ gebildet. Die Bezeichnung CP0 bezeichnet ein TiO₂ P25 - Pulver im Auslieferungszustand.

**Tabelle 1: Parameter für die Carbothermalbehandlung von Titandioxidpulver**

| Behandlungsbeispiel | Temperatur [°C] | Atmosphäre [Vol.%] | Gasfluss [l/min] | Haltezeit [min] | Heiz-/Kühlrate [K/min] |
|---|---|---|---|---|---|
| CP0 | - | - | | - | - |
| CP7 | 700 | 10 (Rest: N₂) | 0,3 | 10 | 50/25 |
| CP8 | 800 | 10 (Rest: N₂) | 0,3 | 10 | 50/25 |
| CP9 | 900 | 10 (Rest: N₂) | 0,3 | 10 | 50/25 |
| CP9,5 | 950 | 10 (Rest: N₂) | 0,3 | 10 | 50/25 |
| CP10 | 1000 | 10 (Rest: N₂) | 0,3 | 10 | 50/25 |
| CP10,5 | 1050 | 10 (Rest: N₂) | 0,3 | 10 | 50/25 |

Schließlich werden die mit diesem Verfahren behandelten Proben der Behandlungsvorrichtung entnommen. Das vorstehend beispielhaft beschriebene Verfahren zur Behandlung einer Titanoxidverbindung mit einer kohlenstoffhaltigen Gasatmosphäre wird auch als Carbothermalverfahren bezeichnet.

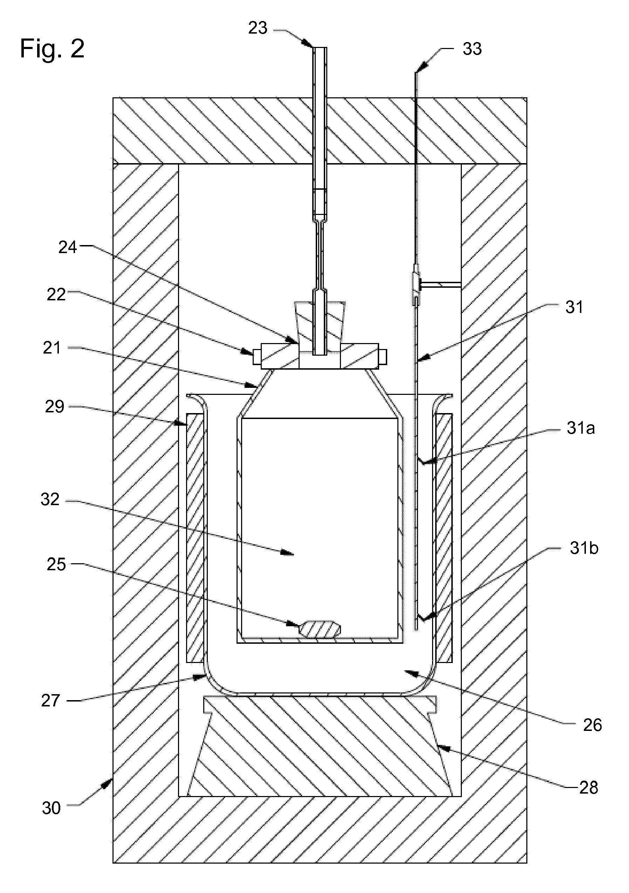

Das erfindungsgemäße Verfahren zur Herstellung einer Nanostruktur aus einer Titanoxidverbindung erfolgt mithilfe der in Fig. 2 gezeigten Synthesevorrichtung. Die Synthesevorrichtung umfasst eine Flasche 21, beispielsweise eine Polytetrafluorethylenflasche, die von einem Haltearm 22 gehalten wird und in die ein Schlauch 23, beispielsweise ein Silikonschlauch, eingeführt ist. Der Schlauch 23 ist dabei durch einen Stopfen eines Flaschendeckels 24 hindurchgeführt. Der Flaschendeckel und die Schlauchdurchführung im Stopfen sind gegen die Umgebung abgedichtet. Innerhalb der Flasche 21 ist eine Rührvorrichtung 25, beispielsweise ein Magnetrührer, angeordnet. Die Rührvorrichtung kann über einen nicht gezeigten Rührvorrichtungsantrieb, beispielsweise einen drehbaren Magneten, angetrieben und gesteuert werden.

Die Flasche ist in einem Ölbad 26 angeordnet, das sich in einem Behälter 27 befindet. Der Behälter 27 ist auf einer Heizplatte 28 angeordnet, und gegen die Umgebung des Behälters 27 mit einer Behälterisolierung 29 thermisch isoliert. Die Heizplatte 28, der Behälter 27 samt Behälterisolierung 29 und die Flasche 21 samt Haltearm 22 und Deckel 24 ist ferner durch eine Außenisolierung 30 umgeben und dadurch gegen die Umgebung thermisch isoliert. Zur Messung der Ölbadtemperatur ist ferner ein Temperaturfühler 31 vorgesehen, der in den Behälter 27 hineinragt und die Ölbadtemperatur an zwei vertikal voneinander beabstandeten Positionen 31 a und 31 b misst. Der Temperaturfühler 31 ist über eine Datenleitung 33 mit einem nicht gezeigten Steuergerät verbindbar. Die Datenleitung 33, der Schlauch 23, eine nicht gezeigte Stromversorgung für die Heizplatte und eine ebenfalls nicht gezeigte Versorgungs- und Steuerleitung für den Rührvorrichtungsantrieb sind durch thermisch isolierte Durchführungen durch die Außenisolierung 30 nach außen geführt.

Zur Herstellung der Nanostrukturen wird in diesem Ausführungsbeispiel eine Titanoxidverbindung, beispielsweise das vorstehend beschriebene AEROXID TiO₂ P25-Pulver, in demineralisiertem Wasser dispergiert. Vorzugsweise wird die Dispersion 15 Minuten mit Ultraschall behandelt. Der Dispersion werden sodann NaOH-Plätzchen (erhältlich von Carl Roth GmbH & Co. KG, Reinheit ≥ 99%) unter Rühren zugegeben, bis eine 10 molare NaOH-Lösung erreicht ist. Diese Dispersion wird über den Schlauch 23 in die Flasche 21 gegeben und im Reaktionsbereich 32 der Flasche 21 einer Temperatur ausgesetzt, die von dem gezeigten Steuergerät über die Heizplatte und basierend auf den an den Messpositionen 31a und 31b des Temperaturfühlers 31 ermittelten Temperaturen gesteuert wird. Dabei wird in diesem Ausführungsbeispiel die Flasche 21 beispielsweise über den Schlauch 23 gegen die Umgebung geöffnet, so dass die Temperaturbehandlung bei Atmosphärendruck bzw. Umgebungsdruck erfolgt. Der Schlauch dient dabei als Rückflusskühler nach Art eines Dimroth-Kühlers, um verdampfendes Wasser aus der NaOH-Lösung zu kondensieren und an die Flasche 21 zurückzuführen. Dadurch ändert sich die NaOH-Konzentration während der Temperaturbehandlung nicht oder nur unwesentlich. Nach Abschluss der Temperaturbehandlung wird die Dispersion der Flasche 21 entnommen und filtriert. Das Filtrat enthält die Nanostrukturen aus der Titanoxidverbindung in Nanoröhrchen- oder Nanoröllchenform.

In Tabelle 2 sind Syntheseparameter zur Herstellung von Nanoröhrchen oder Nanoröllchen aus Titandioxid mit dem vorstehend beschriebenen Verfahren angegeben. Das dabei verwendete Titandioxid ist jeweils ein AEROXID TiO₂ P25 - Pulver im Auslieferungszustand.

**Tabelle 2: Syntheseparameter für Nanostrukturen aus Titandioxid**

| Synthese-Beispiel | Temperatur [°C] | Dauer [h] | Feststoffgehalt [g/l] | Konzentration NaOH [mol/l] | Volumen NaOH [ml] |
|---|---|---|---|---|---|
| SB1 | 100 | 25 | 0,25 | 10 | 400 |
| SB2 | 100 | 25 | 2,50 | 10 | 400 |
| SB3 | 100 | 25 | 4,75 | 10 | 400 |
| SB4 | 120 | 25 | 0,25 | 10 | 400 |
| SB5 | 120 | 25 | 2,50 | 10 | 400 |
| SB6 | 120 | 25 | 4,75 | 10 | 400 |
| SB7 | 100 | 20 | 2,50 | 10 | 400 |
| SB8 | 100 | 25 | 2,50 | 10 | 400 |
| SB9 | 100 | 30 | 2,50 | 10 | 400 |
| SB10 | 120 | 20 | 2,50 | 10 | 400 |
| SB11 | 120 | 25 | 2,50 | 10 | 400 |
| SB12 | 120 | 30 | 2,50 | 10 | 400 |

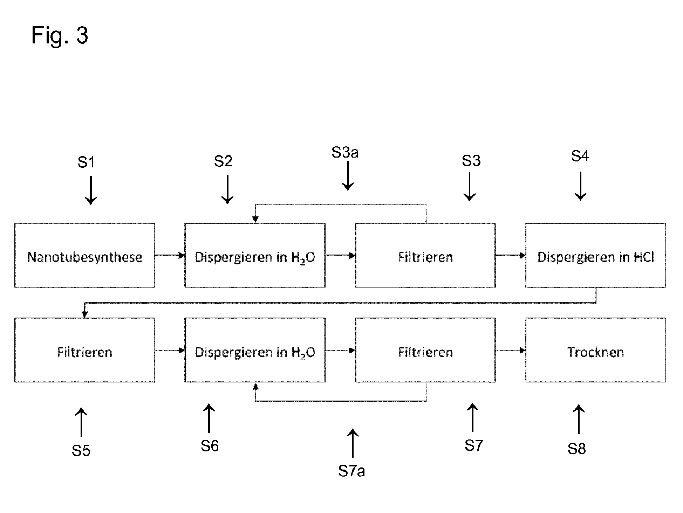

Natriumionen, die synthesebedingt zwischen den Wänden der Nanoröhrchen bzw. Nanoröllchen eingelagert sind, werden im Anschluss an die oben beschriebene Synthese vermittels eine Ionenaustauschverfahrens gegen Protonen ausgetauscht. Das Verfahren ist schematisch in Fig. 3 gezeigt. Dazu wird das bei der Synthese (in Schritt S1) erhaltene Filtrat zunächst so oft in demineralisiertem Wasser dispergiert (Schritt S2) und anschließend filtriert (Schritt S3). Die Schritte S2 und S3 werden so oft wiederholt (Schritt S3a), bis das Filtrat eine elektrische Leitfähigkeit von höchstens 20 µS/cm aufweist. Das so erhaltene Filtrat wird dann in eine 0,1 molare HCl-Lösung gegeben (Schritt S4) und für eine gewisse Zeit gerührt, beispielsweise 5 min, 10 min oder 15 min, sowie anschließend filtriert (Schritt S5). Das so erhaltene Filtrat wird erneut in demineralisiertem Wasser dispergiert (Schritt S6) und anschließend filtriert (Schritt S7). Die Schritte S6 und S7 werden so oft wiederholt (S7a), bis das resultierende Filtrat eine elektrische Leitfähigkeit von höchstens 2 µS/cm aufweist. Abschließend wird das so erhaltene Filtrat getrocknet (Schritt S8).

Das vorstehend beschriebene Herstellverfahren ist erfindungsgemäß ebenso auf Titanoxidverbindungen anwendbar, die mit dem vorstehend beschriebenen Behandlungsverfahren behandelt wurden, beispielsweise auf ein carbothermalbehandeltes AEROXID TiO₂ P25 - Pulver. Als beispielhafte Syntheseparameter zur Herstellung entsprechender Nanoröhrchen oder Nanoröllchen sind Parameter gewählt, die bei unbehandelten Titanoxidverbindungen besonders große spezifische Oberflächen ergaben. In diesem Ausführungsbeispiel sind das eine Temperatur von 115 °C, eine Dauer von 20 Stunden, ein Feststoffgehalt zwischen 2,5 g/l und 3 g/l, eine NaOH-Konzentration von 10 mol/l und ein NaOH-Volumen von 400 ml. Die so erhaltenen beispielhaften Nanostrukturen sind in Tabelle 3 angegeben.

**Tabelle 3: Nanostrukturen aus carbothermalbehandeltem Titandioxid**

| Nanostruktur | Ausgangsmaterial |
|---|---|
| CSB1 | CP7 |
| CSB2 | CP8 |
| CSB3 | CP9 |
| CSB4 | CP9,5 |
| CSB5 | CP10 |
| CSB6 | CP10,5 |
| CSB0 | CP0 |

Nanostrukturen aus einer Titanoxidverbindung, insbesondere im vorstehend beschriebenen Herstellverfahren synthetisierte Nanostrukturen, können erfindungsgemäß mithilfe der in Fig. 1 gezeigten Behandlungsvorrichtung dem erfindungsgemäßen Verfahren zur Erhöhung der elektrischen Leitfähigkeit der Nanostrukturen unterzogen werden. Bei diesem Verfahren werden in diesem Ausführungsbeispiel Nanostrukturen wie Nanoröhrchen oder Nanoröllchen aus einer Titanoxidverbindung in den Heizbereich 6 der Behandlungsvorrichtung eingebracht und einer Gasatmosphäre sowie einer Temperatur zwischen 200 °C und 700 °C ausgesetzt. Die Gasatmosphäre kann dabei die in Tabelle 1 angegebene Gasatmosphäre sein. Beispielhafte Parameter für eine Erhöhung der Leitfähigkeit nach diesem Verfahren sind in Tabelle 4 angegeben. Bei den gemäß Tabelle 4 behandelten Nanostrukturen handelt es sich um Nanostrukturen, die mit den vorstehend in Bezug auf Tabelle 3 genannten Parametern synthetisiert wurden, d.h. mit einer Temperatur von 115 °C, einer Dauer von 20 Stunden, einem Feststoffgehalt zwischen 2,5 g/l und 3 g/l, einer NaOH-Konzentration von 10 mol/l und ein NaOH-Volumen von 400 ml. Dabei ist Beispiel NSB0 ein unbehandeltes Referenzbeispiel.

**Tabelle 4: Nachbehandlung von Nanostrukturen mit dem Carbothermalverfahren**

| Nachbehandlungsbeispiel | Temperatur [°C] | Atmosphäre [Vol.%] | Gasfluss [l/min] | Haltezeit [min] | Heiz/Kühlrate [K/min] |
|---|---|---|---|---|---|
| NSB0 | 25 | - | - | - | - |
| NSB1 | 350 | 30 | 0,3 | 60 | 10 |
| NSB2 | 375 | 30 | 0,3 | 60 | 10 |
| NSB3 | 400 | 30 | 0,3 | 60 | 10 |
| NSB4 | 425 | 30 | 0,3 | 60 | 10 |
| NSB5 | 350 | 50 | 0,3 | 60 | 10 |
| NSB6 | 375 | 50 | 0,3 | 60 | 10 |
| NSB7 | 400 | 50 | 0,3 | 60 | 10 |
| NSB8 | 425 | 50 | 0,3 | 60 | 10 |

Im Folgenden werden die Eigenschaften der mit den vorstehend beschriebenen Verfahren behandelten Titanoxidverbindungen bzw. hergestellten und/oder nachbehandelten Nanostrukturen beschrieben. Die Eigenschaften der Titanoxidverbindungen und der Nanostrukturen wurden mithilfe von Stickstoffadsorption nach der Methode von Brunauer, Emmett und Teller (BET), gravimetrischer Analyse (TGA), Röntgendiffraktometrie (XRD), Rasterelektronenmikroskopie (REM), energiedispersiver Röntgenspektroskopie (EDX) und Transmissionselektronenmikroskopie (TEM) untersucht.

Die spezifische Oberfläche der Nanostrukturen wurde mittels Stickstoffadsorption an einem Gerät vom Typ NOVA 2200 (Quantachrome, Boynton Beach, USA) nach der Methode von Brunauer, Emmett und Teller (BET) bestimmt. Die Nanostrukturen wurden bei 150 °C für 60 Minuten im Vakuum ausgeheizt. Die Badtemperatur betrug -195,75 °C, die Haltezeit 60 min (Adsorption / Desorption). Alle Analysen wurden an mindestens 300 mg Nanostrukturen durchgeführt, was etwa 10¹⁵ Nanostrukturen pro Analyseprobe entspricht, , um eine mittlere spezifische Oberfläche basierend auf einer ausreichend großen Anzahl an Nanostrukturen zu ermitteln.

Für die thermogravimetrische Analyse (TGA) wurde eine Thermowaage vom Typ TG Iris F1 (Netzsch Gerätebau, Selb, D) verwendet. Alle TGA-Analysen wurden in einem offenen Al₂O₃ Tiegel mit einer Analyseprobenmasse von 10 bis 20 mg an synthetischer Luft durchgeführt. Die gasförmigen Zersetzungsprodukte der TGA Analyse wurden durch ein gekoppeltes FT-IR-Spektrometer vom Typ Tensor 27 (Bruker Optics, Billerica, USA) untersucht.

Pulver-XRD-Analysen wurden an einem Diffraktometer vom Typ X'Pert PRO (PANalytical B. V., Almelo, NL) durchgeführt. Zur Auswertung der Beugungsreflexe wurde die Software X'Pert HighScore Plus (Version2.2d) und die Referenzdatenbank PAN-ICSD verwendet. Die Anpassung der Reflexe erfolgte durch Pseudo-Voigt Fitting. Die Proben wurden im Backloading-Verfahren präpariert und unter Verwendung der Cu K_{α}-Strahlung (λ_{Kα1} = 1,450598 A, λ_{Kα2} = 1,544426 A, K_{α1} / K_{α2} = 0,5) analysiert. Zur Berechnung der Netzebenabstände aus der Lage der Peakmaxima wurde die Wellenlänge der K_{α1} Strahlung herangezogen. Die Intensität und Verschiebung der Reflexe wurden mittels externer Al₂O₃- und Si-Standards überprüft und bedurften keiner weiteren Korrektur. Mögliche Höhenfehler wurden mit Hilfe eines internen Standards überprüft und ausgeschlossen. Alle Proben wurden mit den folgenden Einstellungen analysiert: 2Θ Start- bzw. Endposition: 5° - 100°; bestrahlte Länge: 20 mm; Schrittweite: 0,013°; Zeit pro Schritt: 13,77 s; Röhrenspannung: 45 kV; Stromstärke: 40 mA.

Die Beschleunigungsspannung der Elementanalyse mittels energiedispersiver Röntgenspektroskopie (EDX, EDAX Ametek), die an ausgewählten Stellen von REM-Proben stattfand betrug typischerweise 10 kV (Analyse wurde orientiert an Ti als schwerstes Element).

Rasterelektronenmikroskopaufnahmen wurden mit einem Gerät des Typs LEO 1525 (Carl Zeiss NTS GmbH, Oberkochen, D) angefertigt. Die Beschleunigungsspannung betrug 5 kV, der Arbeitsabstand 5 mm. Alle Proben wurden auf ein doppelseitiges Kohlenstoffpad aufgeklebt und mit Spektralkohle bedampft.

Aufnahmen an einem Transmissionselektronenmikroskop vom Typ CM300 (Philips N. V., Amsterdam, NL) wurden mit einer Beschleunigungsspannung 300 kV im Hellfeldmodus angefertigt. Die Proben wurden auf einem Kupfergrid mit Lacy-Kohlefilm präpariert. Dazu wurden die Nanotube-Pulver in Ethanol mittels Ultraschall dispergiert und auf das Trägernetzchen aufgetragen.

Die Ermittlung der elektrischen Leitfähigkeit wurde durch Ermittlung des elektrischen Widerstands von in einem Al₂O₃-Rohr gepressten Zylindern durchgeführt. Dazu wurde die jeweilige Probe mittels eines Trichters in das Rohr eingefüllt und auf 0,4 g/cm³ für Titanoxidverbindungen und auf zw. 0,2 g/cm³ für Nanostrukturproben mit Hilfe einer manuellen Gewindepresse verdichtet. Die elektrische Leitfähigkeit wurde aus dem gemessenen Widerstand der verdichteten Probe, der gemessenen Länge der verdichteten Probe und dem Rohrdurchmesser berechnet.

Mit den vorstehend beschriebenen Analyseverfahren wurden die in Tabelle 1 angegebenen, carbothermalbehandelten Titanoxidverbindungen und die in Tabellen 3 und 4 angegebenen Nanostrukturen untersucht. Stichprobenartige Untersuchungen mit REM und TEM ergaben, dass röhrchen- oder röllchenförmige Nanostrukturen mit einer Wandstärke von 2 nm bis 5 nm herstellbar waren, die Längen bis zu mehreren µm aufweisen. Vermittels REM und TEM wurde festgestellt, dass bei ausreichend hohen Nachbehandlungstemperaturen oberhalb von 400 °C in Tabelle 4 Nanostrukturen mit Bandform mit einer Breite von 39 nm bis 45 nm, einer Dicke von mindestens 5 nm und Längen bis zu mehreren µm herstellbar sind.

Tabelle 5 zeigt den vermittels gravimetrischer Analyse ermittelten Anteil der Kohlenstoffatome an den gemäß Tabelle 1 carbothermalbehandelten Titanoxidverbindungen, bezogen auf die Gesamtanzahl der Atome, die in den carbothermalbehandelten Titanoxidverbindungen enthalten sind, sowie der Atome, die in möglicherweise neben den carbothermalbehandelten Titanoxidverbindungen vorliegenden, kristallinen und/oder amorphen Kohlenstoffpartikeln und/oder kristallinen und/oder amorphen Kohlenstoffbeschichtungen enthalten sind. Gleichermaßen zeigt Tabelle 6 den entsprechenden Anteil von Kohlenstoffatomen in Bezug auf aus den carbothermalbehandelten Titanoxidverbindungen hergestellte Nanostrukturen gemäß Tabelle 3.

**Tabelle 5: Kohlenstoffanteil für carbothermalbehandeltes Titandioxid gemäß Tabelle 1**

| Behandlungsbeispiel | Temperatur [°C] | Kohlenstoffanteil [at%] | Kohlenstoffanteil [Gew%] |
|---|---|---|---|
| CP0 | - | - | - |
| CP7 | 700 | 41,9 | 24,5 |
| CP8 | 800 | 47,8 | 29,2 |
| CP9 | 900 | 61,9 | 42,3 |
| CP9,5 | 950 | 63,6 | 44,0 |
| CP10 | 1000 | 58,4 | 38,7 |
| CP10,5 | 1050 | 63,8 | 44,3 |

**Tabelle 6: Kohlenstoffanteil für Nanostrukturen gemäß Tabelle 3**

| Nanostruktur | Ausgangsmaterial | Kohlenstoffanteil [at%] | Kohlenstoffanteil [Gew%] |
|---|---|---|---|
| CSB0 | CP0 | - | - |
| CSB1 | CP7 | 10,3 | 6,0 |
| CSB2 | CP8 | 32,1 | 20,9 |
| CSB3 | CP9 | 50,9 | 36,7 |
| CSB4 | CP9,5 | 54,7 | 40,3 |
| CSB5 | CP10 | 57,5 | 43,1 |
| CSB6 | CP10,5 | 58,0 | 43,5 |

Aus Tabellen 5 und 6 ist ersichtlich, dass insbesondere Nanostrukturen CSB1 und CSB2 einen im Vergleich zum jeweiligen Ausgangsmaterial CP7 und CP8 deutlich verringerten Kohlenstoffanteil aufweisen. Ohne Einschränkung auf eine bestimmte Theorie wird hierbei davon ausgegangen, dass ein Teil des Kohlenstoffs, dem die Titanoxidverbindung bei der Carbothermalbehandlung ausgesetzt wird, durch die Carbothermalbehandlung in die Titanoxidverbindung eingebracht wird und sich dadurch auf Zwischengitterplätzen und/oder Gitterplätzen der Titanoxidverbindung befindet und/oder in einer Titancarbidstruktur und/oder in Form eines Mischkristalls aus der TiO₂-Phase und/oder der TiO-Phase und der TiC-Phase in der Titanoxidverbindung vorliegt. Es wird ferner davon ausgegangen, dass ein weiterer Teil des zur Verfügung gestellten Kohlenstoffs neben der Titanoxidverbindung in amorpher und/oder kristalliner Form, z.B. als Kohlenstoffpartikel und/oder als eine Kohlenstoffbeschichtung der Titanoxidverbindung vorliegt. Bei der Herstellung von Nanostrukturen aus den carbothermalbehandelten Titanoxidverbindungen verbleibt der erstgenannte Teil während und nach der Nanostruktursynthese an den beschriebenen Plätzen bzw. in der beschriebenen Form. Der letztgenannte Teil wird dagegen während der Nanostruktursynthese ausgewaschen bzw. ausfiltriert, so dass die hergestellten Nanostrukturen einen im Vergleich zu den entsprechenden carbothermalbehandelten Ausgangsmaterialien verringerten Kohlenstoffanteil aufweisen. Das bedeutet, dass die in Tabelle 6 gezeigten Werte im Wesentlichen den Anteil des in den Nanostrukturen enthaltenen Kohlenstoffs angibt, im Einklang mit einer Überprüfung der in Tabelle 6 durch gravimetrische Analyse erhaltenen Kohlenstoffanteile mit einer vermittels EDX durchgeführten Elementanalyse an stichprobenartig ausgewählten Nanostrukturen.

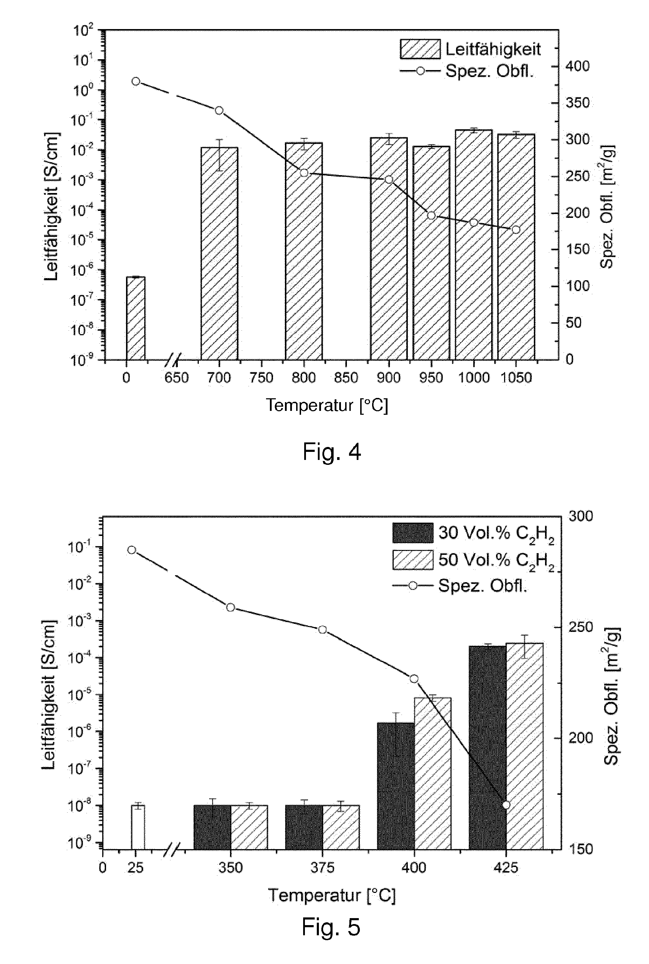

Figur 4 zeigt spezifische Oberflächen und elektrische Leitfähigkeiten von Nanostrukturen, die gemäß Tabelle 3 aus nach dem Carbothermalverfahren behandelten Titanoxidverbindungen synthetisiert wurden. Die Figur 4 zeigt, dass die Nanostruktur CSB0, die aus der unbehandelten Titanoxidverbindung CP0 synthetisiert wurde, eine um mehrere Größenordnungen geringere Leitfähigkeit aufweist als Nanostrukturen wie beispielsweise CSB1, die aus nach dem Carbothermalverfahren bei zumindest 700 °C behandelten Titanoxidverbindungen wie beispielsweise CP7 synthetisiert wurden. Ohne Einschränkung auf eine bestimmte Theorie wird hierbei davon ausgegangen, dass die erhöhte Leitfähigkeit darauf beruht, dass der Kohlenstoff, der durch die Carbothermalbehandlung wie vorstehend beschrieben in die Titanoxidverbindung eingebracht wurde, sich auch nach der Nanostruktursynthese auf Zwischengitterplätzen und/oder Gitterplätzen der Titanoxidverbindung befindet und/oder in einer Titancarbidstruktur und/oder in Form eines Mischkristalls aus der TiO₂-Phase und/oder der TiO-Phase und der TiC-Phase in der Nanostruktur vorliegt. Im Einklang mit dieser Annahme weisen XRD-Spektren der carbothermalbehandelten Titanoxidverbindungen Strukturen auf, die in der unbehandelten Titanoxidverbindung CP0 nicht existieren und auf in den Titanoxidverbindungen enthaltenen Kohlenstoff hinweisen. Beispielsweise weisen die Spektren ein bei der unbehandelten Titanoxidverbindung CP0 nicht vorhandenes, vergleichsweise scharfes Maximum bei 2θ ∼ 42° bis 43° auf, das auf eine Kristallstruktur vom Typ TiOₓC_{y} hinweist. Figur 4 zeigt außerdem, dass mit steigender Temperatur der Carbothermalbehandlung die spezifische Oberfläche der Nanostrukturen abnimmt, während die elektrische Leitfähigkeit bis zu einer Behandlungstemperatur von 900 °C zunimmt, jedoch oberhalb dieser Behandlungstemperatur im Wesentlichen konstant bleibt. Ein bevorzugter Temperaturbereich für die Carbothermalbehandlung in Bezug auf eine möglichst große spezifische Oberfläche bei zugleich großer elektrischer Leitfähigkeit ist daher ein Bereich zwischen 700 °C und 900 °C.

Figur 5 zeigt spezifische Oberflächen und elektrische Leitfähigkeiten von Nanostrukturen, die gemäß Tabelle 4 nach dem vorstehend beschriebenen Verfahren zur Erhöhung der Leitfähigkeit behandelt wurden. Die Figur zeigt, dass es in einem Temperaturfenster um 400 °C herum möglich ist, Nanostrukturen mit im Vergleich zur nichtbehandelten Nanostruktur NSB0 signifikant erhöhter Leitfähigkeit zu erhalten, während deren spezifische Oberfläche im Vergleich zur Nanostruktur NSB0 nicht zu sehr verringert ist, d.h. die Röhrchen- bzw. Röllchenform der Nanostrukturen ist weitgehend erhalten. Gleichzeitig zeigt Figur 5, dass es möglich ist, bei Temperaturen deutlich oberhalb von 400 °C Nanostrukturen mit weiter erhöhter elektrischer Leitfähigkeit und zugleich deutlich verringerter spezifischer Oberfläche zu erzeugen, d.h. solche, deren Röhrchen- bzw. Röllchenform zu einer Nanostruktur mit Bandform kollabiert ist.

Die in der vorstehende Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

### Bezugszeichenliste

- 1: Isolationsgehäuse
- 2: feuerfestes Material
- 3: Keramikrohr
- 4: Heizvorrichtung
- 5: Ansteuerung
- 6: Heizbereich
- 7: Probe
- 8: Heizvorrichtungstemperaturfühler
- 9: Probentemperaturfühler
- 10: Gaszufuhr
- 11: Gasaustritt
- 21: Flasche
- 22: Haltearm
- 23: Schlauch
- 24: Flaschendeckel
- 25: Rührvorrichtung
- 26: Ölbad
- 27: Behälter
- 28: Heizplatte
- 29: Behälterisolierung
- 30: Außenisolierung
- 31: Temperaturfühler
- 31a, 31b: Temperaturmesspositionen
- 32: Reaktionsbereich
- 33: Datenleitung

## Patentansprüche

1. Verfahren zum Behandeln einer Titanoxidverbindung, wobei die Titanoxidverbindung zumindest Kohlenstoff, Stickstoff und/oder Wasserstoff und einer Temperatur zwischen 600 °C und 1200 °C ausgesetzt wird.

2. Verfahren nach Anspruch 1, wobei die Titanoxidverbindung einer zumindest Kohlenstoff, Stickstoff und/oder Wasserstoff enthaltenden Gasatmosphäre ausgesetzt wird, vorzugsweise bei einer Temperatur zwischen 600 °C und 1200 °C, wobei vorzugsweise der Druck in der Gasatmosphäre Atmosphärendruck ist.

3. Verfahren nach Anspruch 2, **dadurch gekennzeichnet, dass** die Gasatmosphäre ein Inertgas und ein weiteres, zumindest Kohlenstoff, Stickstoff und/oder Wasserstoff enthaltendes Gas enthält, und wobei vorzugsweise der Volumenanteil des weiteren Gases an der Gasatmosphäre zumindest 10 Volumenprozent beträgt und wobei vorzugsweise das Inertgas N₂ und das weitere Gas Ethingas ist.

4. Verfahren nach einem der vorangegangenen Ansprüche, **dadurch gekennzeichnet, dass** die Titanoxidverbindung als Pulver vorliegt, vorzugsweise als Titandioxidpulver, und besonders vorzugsweise als Titandioxidpulver mit einem Titandioxidgehalt von zumindest 99,5 Gewichtsprozent, bezogen auf das Gesamtgewicht der Titandioxidverbindung.

5. Verfahren zur Herstellung einer Nanostruktur aus einer Titanoxidverbindung, wobei eine Titanoxidverbindung mit dem Verfahren nach einem der Ansprüche 1 bis 4 behandelt wird, und die so behandelte Titanoxidverbindung in einer alkalischen Lösung dispergiert wird.

6. Verfahren zur Herstellung einer Nanostruktur aus einer Titanoxidverbindung, wobei die Titanoxidverbindung zumindest Kohlenstoff, Stickstoff und/oder Wasserstoff ausgesetzt wird, und die so behandelte Titanoxidverbindung in einer alkalischen Lösung dispergiert wird.

7. Verfahren nach Anspruch 5 oder 6, **dadurch gekennzeichnet, dass** die alkalische Lösung eine NaOH-Lösung ist, bevorzugt eine zumindest 8 molare NaOH-Lösung, und besonders bevorzugt eine zumindest 10 molare NaOH-Lösung.

8. Verfahren nach einem der Ansprüche 5 bis 7, **dadurch gekennzeichnet, dass** die durch das Dispergieren erhaltene Dispersion einer Temperatur von zumindest 80 °C ausgesetzt wird.

9. Verfahren nach einem der Ansprüche 5 bis 8, **dadurch gekennzeichnet, dass** eine Ausfällung aus der durch das Dispergieren erhaltenen Dispersion extrahiert wird, und die extrahierte Ausfällung in HCl-Lösung dispergiert wird.

10. Verfahren zur Erhöhung der elektrischen Leitfähigkeit einer Nanostruktur aus einer Titanoxidverbindung, wobei die Nanostruktur einer Gasatmosphäre und einer Temperatur zwischen 200 °C und 700 °C ausgesetzt wird, wobei die Gasatmosphäre ein Inertgas und ein weiteres, zumindest Kohlenstoff, Stickstoff und/oder Wasserstoff enthaltendes Gas enthält, und wobei der Volumenanteil des weiteren Gases an der Gasatmosphäre zumindest 10 Volumenprozent beträgt.

11. Verfahren nach Anspruch 10, **dadurch gekennzeichnet, dass** die Nanostruktur mit einem Verfahren nach einem der Ansprüche 5 bis 9 hergestellt ist.

12. Nanostruktur aus einer Titanoxidverbindung, **dadurch gekennzeichnet, dass** die Nanostruktur eine Röhrchen- oder Röllchenform aufweist, zumindest Kohlenstoff, Stickstoff und/oder Wasserstoff enthält, wobei die Menge des Kohlenstoffs, Stickstoffs und/oder Wasserstoffs zumindest 2 Gew%, bezogen auf die Gesamtmasse der Nanostruktur, beträgt, und eine elektrische Leitfähigkeit bei Raumtemperatur von zumindest 10⁻³ S/cm aufweist, wobei die Nanostruktur vorzugsweise eine spezifische Oberfläche bei Raumtemperatur von zumindest 175 m²/g aufweist.

13. Nanostruktur aus einer Titanoxidverbindung, **dadurch gekennzeichnet, dass** die Nanostruktur eine Röhrchen- oder Röllchenform aufweist, zumindest Kohlenstoff, Stickstoff und/oder Wasserstoff enthält, wobei die Menge des Kohlenstoffs, Stickstoffs und/oder Wasserstoffs zumindest 2 Gew%, bezogen auf die Gesamtzahl der Atome der Nanostruktur, beträgt, und eine spezifische Oberfläche bei Raumtemperatur von zumindest 175 m²/g aufweist, wobei die Nanostruktur vorzugsweise eine elektrische Leitfähigkeit bei Raumtemperatur von zumindest 10⁻³ S/cm aufweist.

14. Nanostruktur nach Anspruch 12 oder 13, **dadurch gekennzeichnet, dass** die Nanostruktur unter Verwendung der Verfahren nach einem der Ansprüche 5 bis 11 hergestellt ist.

15. Nanostruktur aus einer Titanoxidverbindung, **dadurch gekennzeichnet, dass** die Nanostruktur eine Bandform aufweist, zumindest Kohlenstoff, Stickstoff und/oder Wasserstoff enthält, wobei die Menge des Kohlenstoffs, Stickstoffs und/oder Wasserstoffs zumindest 2 Gew%, bezogen auf die Gesamtmasse der Nanostruktur, beträgt, und eine elektrische Leitfähigkeit bei Raumtemperatur von zumindest 10⁻³ S/cm aufweist.
